# EUROPÄISCHE PATENTSCHRIFT

(11) **EP 1 116 933 B1**
(45) Veröffentlichungstag und Bekanntmachung des Hinweises auf die Patenterteilung: **23.10.2002**
(21) Anmeldenummer: 01100346.4
(22) Anmeldetag: 05.01.2001
(51) Int. Cl.: G01C 9/26, G01C 25/00, B22F 3/11

(54) **Wasserwaage**
Spirit level
Niveau à bulle

(30) Priorität: 14.01.2000 AT 532000
(43) Veröffentlichungstag der Anmeldung: 18.07.2001
(73) Patentinhaber: Ing. Guido Scheyer SOLA-Messwerkzeuge, Gesellschaft m.b.H. & Co., A-6840 Götzis (AT)
(72) Erfinder: Hörburger, Walter, Dr., 6840 Götzis (AT); Scheyer, Wolfgang, Mag., 6840 Götzis (AT)
(74) Vertreter: Hefel, Herbert, Dipl.-Ing.

(56) Entgegenhaltungen:
- DE-A- 2 423 564
- DE-A- 4 315 098

## Beschreibung

Die Erfindung betrifft eine Wasserwaage mit einem Wasserwaagenkörper und zumindest einer darin eingesetzten Libelle.

Wasserwaagen mit Wasserwaagenkörpern aus Kunststoff, bei denen der Kunststoff im Inneren des Wasserwaagenkörpers durch Zusetzung eines Treibmittels bei der Herstellung des Wasserwaagenkörpers aufgeschäumt und dadurch porös ist, sind bekannt. Gegenüber bekannten Wasserwaagen mit Wasserwaagenkörpern aus einem Aluminium-Hohlprofil weisen derartige Kunststoff-Wasserwaagen den Vorteil der leichteren Befestigung der Libellen im Wasserwaagenkörper auf. Wenn der Innenraum eines Kunststoff-Wasserwaagenkörpers mit geschäumtem Kunststoff ausgefüllt ist, können zur Befestigung der Libellen in einfacher Weise entsprechende Ausnehmungen im Wasserwaagenkörper vorgesehen sein, in welche die Libellen eingeklebt werden. Bei Aluminium-Hohlprofilen als Wasserwaagenkörper sind zusätzliche Haltevorrichtungen für die Libelle notwendig, deren Einbringung in das Aluminium-Hohlprofil auch zusätzliche Fertigungsschritte bei der Herstellung der Wasserwaage bedingt.

Nachteilig bei Kunststoffwasserwaagen ist aber ihre geringere Genauigkeit. Infolge der Abkühlung des Wasserwaagenkörpers nach seiner Herstellung tritt eine gewisse Schrumpfung auf, die entlang der achsialen Ausdehnung des Wasserwaagenkörpers nicht völlig gleichmäßig ist. Dies führt zu Ungenauigkeiten der Meßfläche an der Unterseite des Wasserwaagenkörpers. Wasserwaagen mit Wasserwaagenkörpern aus aufgeschäumtem Kunststoff werden aus diesem Grund nur bis zu einer Länge von 80 cm hergestellt, wobei die erreichbaren Toleranzen der Ebenheit der Meßfläche bei 0,3 mm liegen. Wasserwaagenkörper aus AluminiumHohlprofilen werden dagegen nach der Herstellung des Profils in einem Ausrichtevorgang zum Ausrichten der Meßfläche nachbearbeitet. Die erreichbaren Toleranzen der Ebenheit der Meßfläche von Wasserwaagen bis zu 2 m Länge liegen dabei im Bereich von 0,15 mm und bei Wasserwaagen, die kürzer als 80 cm sind, bei 0,1 mm. Die Ausrichtung der Meßfläche in einem Nachbearbeitungsvorgang führt allerdings zu einem zusätzlichen Herstellungsaufwand.

Aufgabe der Erfindung ist es, die Nachteile der bekannten Wasserwaagenkörper zu überwinden und eine in Serienfertigung einfach herstellbare Wasserwaage bereitzustellen, welche eine ho-he Genauigkeit aufweist. Erfindungsgemäß gelingt dies bei einer Wasserwaage der eingangs genannten Art dadurch, daß der Wasserwaagenkörper aus einem geschäumten Metall besteht.

Poröse Metallkörper aus einem aufgeschäumten Metall sind bekannt. Beispielsweise beschreiben die US-PS 3,087,807, die DE-PS 4 101 630 und die DE-PS 4 018 360 derartige aufgeschäumte Metallkörper bzw. Verfahren zu deren Herstellung, so daß diese hier nicht mehr näher erläutert werden müssen.

Überrraschenderweise hat es sich gezeigt, daß durch die Ausbildung des Wasserwaagenkörpers als geschäumter Metallkörper bei einer gleichzeitig sehr einfachen und arbeitssparenden Möglichkeit zur Serienproduktion eine äußerst genaue Wasserwaage gefertigt werden kann. Zwar kommt es bei der Abkühlung des Wasserwaagenkörpers nach dessen Herstellung ebenfalls (wie bei Wasserwaagenkörpern aus geschäumtem Kunststoff) zu einer Schrumpfung, diese ist allerdings über die Länge des Wasserwaagenkörpers äußerst gleichmäßig, so daß auf diese Weise eine sehr genaue Wasserwaage erhalten wird, ohne daß eine Nachbearbeitung der Meßfläche nötig wäre.

In einem bevorzugten Ausführungsbeispiel ist der Wasserwaagenkörper mit einer Kunststoffbeschichtung versehen.

Weitere Vorteile und Einzelheiten der Erfindung werden im folgenden anhand der beiliegenden Zeichnung erläutert. In dieser zeigen:
- Fig. 1: eine perspektivische Darstellung eines Wasserwaagenkörpers aus einem geschäumten Metall und die
- Fig. 2: einen schematischen Teilquerschnitt des Wasserwaagenkörpers von Fig. 1 entlang der Linie A-A.

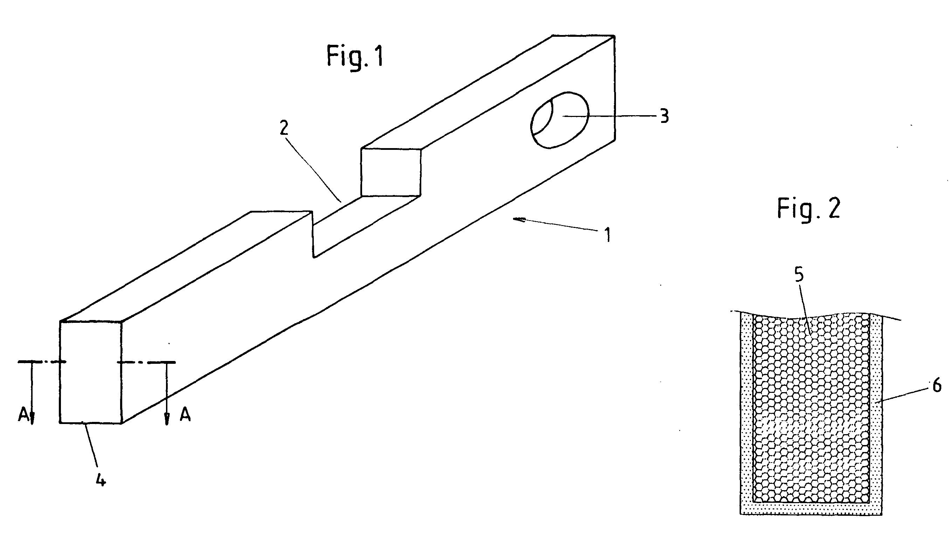

Der in Fig. 1 gezeigte Wasserwaagenkörper 1 ist mit Ausnehmungen 2, 3 versehen, in welche in einem anschließenden Produktionsschritt Libellen eingesetzt und verklebt werden. Außerdem kann der Wasserwaagenkörper 1 vor oder nach dem Einsetzen der Libellen in die Ausnehmungen 2, 3 mit einer Kunststoffbeschichtung versehen werden. Die an der Unterseite des Wasserwaagenkörpers 1 sich befindende Meßfläche 4 weist bei einer Länge des Wasserwaagenkörpers 1 von 80 cm in ihrer Ebenheit eine Toleranz von weniger als 0,1 mm auf.

Der Wasserwaagenkörper 1 besteht erfindungsgemäß aus einem geschäumten Metall, vorzugsweise aus geschäumtem Aluminium. Wie in Fig. 2 schematisch angedeutet, weist das gezeigte Ausführungsbeispiel eines Wasserwaagenkörpers im Inneren des Wasserwaagenkörpers einen Bereich 5 aus einer hochporösen Metallschaumschicht und oberflächliche Bereiche 6 auf, die weniger bzw. kaum porös sind. Ein Verfahren zur Herstellung derartiger Körper aus einem geschäumten Metall ist beispielsweise aus der bereits erwähnten DE-PS 4 101 630 bekannt.

In Abhängigkeit von der beabsichtigten Verwendung der Wasserwaage kann der Wasserwaagenkörper anstelle der in Fig. 1 dargestellten Form auch eine andere für eine Wasserwaage geeignete Form aufweisen und mit entsprechend der Anzahl und gewünschten Anordnung der Libellen ausgebildeten Ausnehmungen für diese Libellen versehen sein.

### Legende zu den Hinweisziffern:

- 1: Wasserwaagenkörper
- 2: Ausnehmung
- 3: Ausnehmung
- 4: Meßfläche
- 5: innerer Bereich
- 6: oberflächlicher Bereich

## Patentansprüche

1. Wasserwaage mit einem Wasserwaagenkörper (1) und zumindest einer darin eingesetzten Libelle, **dadurch gekennzeichnet, daß** der Wasserwaagenkörper (1) aus einem geschäumten Metall besteht.

2. Wasserwaage nach Anspruch 1, **dadurch gekennzeichnet, daß** das geschäumte Metall geschäumtes Aluminium ist.

3. Wasserwaage nach Anspruch 1 oder Anspruch 2, **dadurch gekennzeichnet, daß** der Wasserwaagenkörper (1) kunststoffbeschichtet ist.

4. Wasserwaage nach einem der Ansprüche 1 bis 3, **dadurch gekennzeichnet, daß** der Wasserwaagenkörper (1) Ausnehmungen (2, 3) für die Libellen aufweist.

5. Wasserwaage nach einem der Ansprüche 1 bis 4, **dadurch gekennzeichnet, daß** der Wasserwaagenkörper (1) in seinem inneren Bereich (5) hoch porös ist und angrenzend an seine Oberflächen Bereiche (6) aufweist, die weniger bzw. kaum porös sind und eine im wesentlichen geschlossene Außenhaut bilden.

## Claims

1. A spirit level having a spirit-level body (1) and at least one bubble unit inserted therein, **characterised in that** the spirit-level body (1) is made of a foamed metal.

2. A spirit level according to Claim 1, **characterised in that** the foamed metal is foamed aluminium.

3. A spirit level according to Claim 1 or Claim 2, **characterised in that** the spirit-level body (1) is plastics-coated.

4. A spirit level according to any one of Claims 1 to 3, **characterised in that** the spirit-level body (1) has openings (2, 3) for the bubble units.

5. A spirit level according to any one of Claims 1 to 4, **characterised in that** the spirit-level body (1) is very porous in its inner region (5) and adjacent to its surfaces has regions (6) which are less porous or barely porous and form a substantially closed outer skin.

## Revendications

1. Niveau à bulle comprenant un corps de niveau (1) et au moins une nivelle logée dans ce corps,
**caractérisé en ce que**
le corps de niveau (1) est fait d'une mousse métallique.

2. Niveau à bulle selon la revendication 1,
**caractérisé en ce que**
le métal en mousse est de l'aluminium.

3. Niveau à bulle selon l'une quelconque des revendications 1 ou 2,
**caractérisé en ce que**
le corps de niveau (1) est recouvert de matière plastique.

4. Niveau à bulle selon l'une quelconque des revendications 1 à 3,
**caractérisé en ce que**
le corps de niveau (1) présente des évidements (2, 3) pour loger des nivelles.

5. Niveau à bulle selon l'une quelconque des revendications 1 à 4,
**caractérisé en ce que**
le corps de niveau (1) est, dans sa zone interne (5) hautement poreux et présente, à la limite de sa surface externe, des zones (6) qui sont moins ou à peine poreuses et forment une peau externe essentiellement fermée.
